# EUROPÄISCHE PATENTANMELDUNG

(11) **EP 2 075 514 A1**
(43) Veröffentlichungstag der Anmeldung: **01.07.2009**
(21) Anmeldenummer: 07025164.0
(22) Anmeldetag: 28.12.2007
(51) Int. Cl.: F24J 2/04

(54) **Solarkollektor**

(71) Anmelder: Schubert, Klaus-Peter, Dr., 88677 Markdorf (DE)
(72) Erfinder: Schubert, Klaus-Peter, Dr., 88677 Markdorf (DE)
(74) Vertreter: Vetter, Hans

(57) **Zusammenfassung**

Es wird ein Solarkollektor mit einer Absorberoberfläche (12) vorgeschlagen, die mit jeweils zwei Flanken (14, 15) aufweisenden parallelen Rillen (13) mit im Wesentlichen dreieckförmigem Querschnitt versehen sind, wobei die beiden Flanken (14, 15) unterschiedliche Flächen und/oder unterschiedliche Absorptionseigenschaften besitzen, um einen automatischen Ausgleich der absorbierten Sonnenenergie während des Jahres zu bewirken.

## Beschreibung

Die Erfindung betrifft einen Solarkollektor zur Heißwassererzeugung und/oder Heizungsunterstützung für solarthermische Systeme beziehungsweise solare Heißwasseranlagen, wie sie in vielfacher Form bekannt sind und verwendet werden, zum Beispiel Flachkollektoren, Röhrenkollektoren und dergleichen.

Prinzipiell ist eine möglichst große Fläche erstrebenswert, um auch im Winter und bei schlechterer Sonneneinstrahlung noch genügend Wärme aufzunehmen beziehungsweise zu erzeugen. Dies führt jedoch dazu, dass in der Sommerzeit, wenn bei intensiverer Sonneneinstrahlung gleichzeitig weniger Wärme benötigt wird, ein beträchtlicher Überschuss an Wärme entstehen kann. Damit die hohen Leerlauftemperaturen zu keiner Schädigung der Anlage führen, muss die Wärme abgeführt werden oder es müssen andere geeignete Maßnahmen ergriffen werden.

Eine Aufgabe der vorliegenden Erfindung besteht darin, einen Solarkollektor zu schaffen, bei dem keine Überschusswärme erzeugt wird oder diese so gering ist, dass besondere Mittel zur Wärmeabfuhr nicht benötigt werden.

Diese Aufgabe wird erfindungsgemäß durch einen Solarkollektor mit den Merkmalen des Anspruchs 1 gelöst.

In vorteilhafter Weise wird durch die Gestaltung der Absorberoberfläche des Solarkollektors mit jeweils zwei Flanken aufweisenden parallelen Rillen erreicht, dass die Wärmeleistung bei niedrig stehender Sonne am größten ist und mit jahreszeitlich ansteigender Sonnenhöhe automatisch sinkt. Damit wird weiterhin der Warmwasserbedarf gedeckt, jedoch schädliche Überschusswärme wirksam verhindert. Durch die Gestaltung der Flächen der beiden Flanken der Rillen und/oder durch Wahl unterschiedlicher Absorptionseigenschaften der Flanken kann die jahreszeitlich unterschiedliche Sonneneinstrahlung ausgeglichen beziehungsweise kompensiert werden, sodass nach entsprechender Optimierung keine Überschusswärme erzeugt wird und eine Abführung von Wärmeenergie im Sommer bei starker Sonneneinstrahlung nicht erforderlich ist. Dies führt zu einer wesentlichen Vereinfachung und Verbilligung, insbesondere bei großen Anlagen.

Durch die in den Unteransprüchen aufgeführten Maßnahmen sind vorteilhafte Weiterbildungen und Verbesserungen des im Anspruch 1 angegebenen Solarkollektors möglich.

Die beiden Flanken der Rillen schließen zweckmäßigerweise einen Flankenwinkel ein, der der doppelten Ekliptikschiefe entspricht, also ca. 47°. Dies entspricht der Winkeldifferenz zwischen dem höchsten Sonnenstand während der Sommersonnenwende und dem höchsten Sonnenstand während der Wintersonnenwende.

Die Absorberoberfläche ist vorzugsweise im Wesentlichen vollständig mit den Rillen versehen, um die jahreszeitliche Anpassung der jeweils aufgenommenen Wärmeenergie zu optimieren.

Zur möglichst gleichmäßigen Erwärmung des Solarkollektors besteht die Absorberoberfläche bevorzugt aus einem Material mit guter Wärmeleitfähigkeit, insbesondere aus Aluminium oder einer Aluminiumlegierung, Kupfer oder einer Kupferlegierung.

Eine optimale jahreszeitliche Anpassung wird durch eine Positionierung des Solarkollektors erreicht, bei der die Flanken mit größerer Fläche und/oder größerem Absorptionskoeffizienten parallel zum Sonneneinstrahlungswinkel bei höchstem Sonnenstand zur Sommersonnenwende und die Flanken mit geringerer Fläche und/oder kleinerem Absorptionskoeffizienten parallel zum Sonneneinstrahlungswinkel bei höchstem Sonnenstand zur Wintersonnenwende ausgerichtet oder im Wesentlichen ausgerichtet sind. Dabei werden die Flächen und/oder Absorptionskoeffizienten der beiden Flanken in vorteilhafter Weise so optimiert, dass die absorbierte Sonnenenergie pro Tag zur Sommersonnenwende den Brauchwasserbedarf und zur Wintersonnenwende den Brauchwasserbedarf und zusätzlich einen Beitrag zur Heizungsunterstützung liefern kann.

Beste Ergebnisse werden dann erzielt, wenn die Absorberoberfläche zur Erdtangente im Wesentlichen um einen Winkel α = ϕ + δ geneigt ist, wobei ϕ die geografische Breite der Position des Solarkollektors und δ die Ekliptikschiefe ist. Dabei sollte die Absorberoberfläche im Wesentlichen nach Süden ausgerichtet sein.

Ein Ausführungsbeispiel der Erfindung ist in der Zeichnung dargestellt und in der nachfolgenden Beschreibung näher erläutert. Es zeigen:
- Figur 1: eine schematische Darstellung eines um den Winkel α zur Erdtangente geneigten Solarkollektors und
- Figur 2: eine Detaildarstellung eines Teilbereichs der Absorberoberfläche im der Seitenansicht.

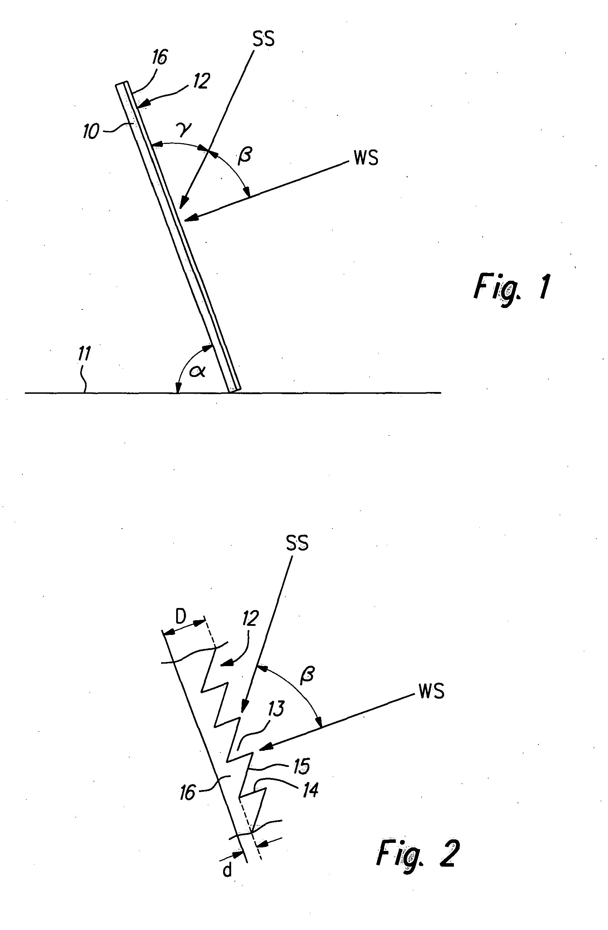

Der in Figur 1 schematisch dargestellte Solarkollektor 10 ist so positioniert, dass er um einen Winkel α zur Erdtangente 11 geneigt ist. Der Winkel α setzt sich dabei additiv aus der geografischen Breite ϕ und der Ekliptikschiefe δ zusammen, die ca. 23,5° beträgt. Bei einer derartigen Positionierung trifft die Sonnenstrahlung bei höchstem Sonnenstand zur Wintersonnenwende WS senkrecht auf den Solarkollektor 10 auf. Da die Sonneneinstrahlung bei höchstem Sonnenstand zur Sommersonnenwende SS um den Winkel 2 δ (ca. 47°) steiler einfällt, ergibt sich ein Winkel γ zum Solarkollektor von 90° - 2 δ (ca. 43°).

Derartige Solarkollektoren sind üblicherweise von einer aufzuwärmenden Flüssigkeit, wie Wasser, durchströmt, wobei flächige oder röhrenförmige Leitungsführungen möglich sind. Es kann sich beim Solarkollektor auch um eine eng aneinanderliegende Reihenanordnung von Wärmerohren handeln. Diese Möglichkeiten und Details sind in der vereinfachten Figur 1 nicht dargestellt. Unabhängig vom Typ des Solarkollektors 10 besitzt er eine Absorberoberfläche 12, wie sie in Figur 2 ausschnittsweise dargestellt ist. Diese befindet sich an einer Absorberplatte 16 oder Absorberbeschichtung aus gut wärmeleitfähigem Material, zum Beispiel aus Aluminium oder einer Aluminiumlegierung, Kupfer oder einer Kupferlegierung. Dabei weist die Absorberoberfläche 12 Rillen 13 auf, die parallel zur Erdtangente 11 bzw. zur Erdtangentialfläche verlaufen. Da der Solarkollektor 10 bevorzugt nach Süden ausgerichtet ist, verlaufen die Rillen 13 somit in Ost-West-Richtung.

Jede der Rillen 13, die einen im Wesentlichen dreieckförmigen Querschnitt besitzen, weist zwei unterschiedliche Flanken 14, 15 auf. Die Flanke 14 mit kleinerer Fläche ist senkrecht zur Absorberoberfläche 12 positioniert, also parallel zur einfallenden Sonnenstrahlung bei höchstem Sonnenstand zur Wintersonnenwende. Die zweite Flanke 15 mit größerer Fläche ist um einen Winkel β = 2 δ (ca. 47°) zur Fläche der Flanke 14 versetzt, verläuft also parallel zur Sonneneinstrahlung beim höchsten Sonnenstand zur Sommersonnenwende. Wesentlich ist dabei, dass der Winkel β = 2 δ ist. Die beschriebene Relativposition zur Absorberoberfläche 12 ist durch die beschriebene Positionierung des Solarkollektors 10 relativ zur Erdtangente 11 beziehungsweise zur Erdtangentialfläche bestimmt. Wenn sich der Winkel α, zum Beispiel wegen spezieller örtlicher Gegebenheiten, ändern muss oder anders gewähnt wird, so muss sich die Orientierung der Flächen der beiden Flanken 14, 15 entsprechend an die Winkel der Sonneneinstrahlung beim höchsten Sonnenstand zur Wintersonnenwende und Sommersonnenwende anpassen.

Die beschriebene Anordnung führt dazu, dass bei höchstem Sonnenstand zur Wintersonnenwende WS die flächenmäßig größeren Flanken 15 bestrahlt werden und bei höchstem Sonnenstand zur Sommersonnenwende SS die flächenmäßig kleineren Flanken 14. Da die Strahlungsleistung der Sonne zur Sommersonnenwende größer ist als zur Wintersonnenwende, wird durch die beschriebene Anordnung automatisch die bestrahlte Fläche an der Absorberoberfläche 12 entsprechend reduziert, sodass ein automatischer wählbarer Ausgleich erfolgt. Die effektiv bestrahlte Fläche und damit die Leistung des Solarkollektors 10 ändert sich somit kontinuierlich von Sommer zu Winter und von Winter zu Sommer und kann so optimiert werden, dass die aufgenommene Wärmeenergie im Winterhalbjahr größer ist.

Anstelle oder zusätzlich zu unterschiedlichen Flächen können die Flanken 14 und 15 auch mit unterschiedlich absorbierenden Oberflächen versehen werden, die den beschriebenen Ausgleich zwischen Sommer und Winter bewerkstelligen. Dies bedeutet zum Beispiel, dass die Flanken 15 eine Oberfläche mit höherer Absorption und die Flanken 14 eine Oberfläche mit geringerer Absorption besitzen. Die mit der Absorberoberfläche 12 versehene Absorberplatte 16 hat beispielsweise eine Gesamtdicke D von 1 - 1,2 mm, während die verbleibende Wandstärke, in die die Rillen nicht hineinreichen, eine Dicke d von 0,4 - 0,5 mm besitzt. Die Absorberplatte 16 kann dabei als Beschichtung ausgebildet sein. Falls es sich um eine separate Platte handelt, so kann diese auch eine größere Dicke aufweisen und die Rillen 13 können größer dimensioniert sein. An den Winkelverhältnissen ändert sich dabei nichts.

## Patentansprüche

1. Solarkollektor mit einer Absorberoberfläche (12), die mit jeweils zwei Flanken (14, 15) aufweisenden parallelen Rillen (13) mit im Wesentlichen dreieckförmigem Querschnitt versehen sind, wobei die beiden Flanken (14, 15) unterschiedliche Flächen und/oder unterschiedliche Absorptionseigenschaften besitzen.

2. Solarkollektor nach Anspruch 1, **dadurch gekennzeichnet, dass** die beiden Flanken (14, 15) einen Flankenwinkel (β) einschließen, der der doppelten Ekliptikschiefe (δ) entspricht.

3. Solarkollektor nach Anspruch 1 oder 2, **dadurch gekennzeichnet, dass** die Absorberoberfläche (12) im Wesentlichen vollständig mit den Rillen (13) versehen ist.

4. Solarkollektor nach einem der vorhergehenden Ansprüche, **dadurch gekennzeichnet, dass** die Absorberoberfläche (12) an einer Schicht oder Platte (16) aus einem Material mit guter Wärmeleitfähigkeit besteht, insbesondere aus Aluminium oder einer Aluminiumlegierung.

5. Solarkollektor nach einem der vorhergehenden Ansprüche, **dadurch gekennzeichnet, dass** durch entsprechende Positionierung die Flanken (15) mit größerer Fläche und/oder größerem Absorptionskoeffizienten parallel zum Sonneneinstrahlungswinkel bei höchstem Sonnenstand zur Sommersonnenwende (SS) und die Flanken (14) mit geringerer Fläche und/oder kleinerem Absorptionskoeffizienten parallel zum Sonneneinstrahlungswinkel bei höchstem Sonnenstand zur Wintersonnenwende (WS) ausgerichtet oder im Wesentlichen ausgerichtet sind.

6. Solarkollektor nach Anspruch 5, **dadurch gekennzeichnet, dass** die Flächen und/oder Absorptionskoeffizienten der beiden Flanken (14, 15) so optimiert sind, dass die absorbierte Sonnenenergie pro Tag zur Wintersonnenwende (WS) wenigstens der absorbierten Sonnenenergie zur Sommersonnenwende (SS) entspricht oder vorzugsweise größer ist.

7. Solarkollektor nach einem der vorhergehenden Ansprüche, **dadurch gekennzeichnet, dass** die Absorberoberfläche (12) zur Erdtangente (11) im Wesentlichen um einen Winkel α = δ + δ geneigt ist, wobei ϕ die geografische Breite der Position des Solarkollektors und δ die Ekliptikschiefe ist.

8. Solarkollektor nach einem der vorhergehenden Ansprüche, **dadurch gekennzeichnet, dass** die Absorberoberfläche (12) im Wesentlichen nach Süden ausgerichtet ist.
